**Europäisches Patentamt**

**European Patent Office**

**Office européen des brevets**

(11) Veröffentlichungsnummer: **0 515 966 A2**

(12) **EUROPÄISCHE PATENTANMELDUNG**

(21) Anmeldenummer: **92108494.3**

(22) Anmeldetag: **20.05.92**

(51) Int. Cl.5: **H04M 9/02**, H04M 7/14, H04M 1/00

(30) Priorität: **25.05.91 DE 4117118**

(43) Veröffentlichungstag der Anmeldung:
**02.12.92 Patentblatt 92/49**

(84) Benannte Vertragsstaaten:
**AT BE CH DE ES FR GB IT LI NL SE**

(71) Anmelder: **Alcatel SEL Aktiengesellschaft**
**Lorenzstrasse 10**
**W-7000 Stuttgart 40(DE)**

(72) Erfinder: **Siegmund, Gerd**
**Geisslerstrasse 4**
**W-7000 Stuttgart 40(DE)**

(74) Vertreter: **Knecht, Ulrich Karl et al**
**STANDARD ELEKTRIK LORENZ AG Patent-**
**und Lizenzwesen Postfach 30 09 29**
**W-7000 Stuttgart 30(DE)**

(54) **Fernmelde-Reihenanlage.**

(57) Es ist eine Fernmeldereihenanlage (11) zur Verwendung als Team- oder Vorzimmeranlage beschrieben, die mehrere Teilnehmerapparate (12) besitzt, die über einen Bus (30) miteinander verbunden sind und von denen mindestens ein Teilnehmerapparat (12) mit einer Amtsleitung oder einer Wählnebenstellenanlage verbindbar ist. Der Bus (30) bildet ein internes Vierdraht-Koppelnetz der einzelnen Teilnehmerapparate (12) miteinander. Die in der Grundausstattung identischen Teilnehmerapparate (12) sind mit einem Mikroprozessor (18) und einem von diesem beaufschlagten Funktionsschaltkreis (17), der zur Ausführung aller den Teilnehmerapparaten (12) zugeordneten Funktionen geeignet und ausgebildet ist, versehen. Zur tatsächlichen Ausführbarkeit bestimmter Funktionen sind Einsteckmodule (31,32) als äußere und/oder innere Schnittstellen für einen oder mehrere der Teilnehmerapparate (12) vorgesehen. Auf diese Weise kommt die Fernmeldeanlage ohne eine zentrale Einrichtung aus und ist an die unterschiedlichsten Gegebenheiten, wie Teilnehmergeräteart, Leistungsmerkmale der betreffenden Geräteart und dgl. in einfacher Weise anpassbar.

FIG.1

Die vorliegende Erfindung bezieht sich auf eine Fernmeldereihenanlage, insbesondere als Team- oder Vorzimmeranlage nach dem Oberbegriff des Anspruchs 1.

Eine derartige Fernmeldereihenanlage ist aus TN-Nachrichten 1982, Heft 84, S.3-15 "Die neuen TN-Reihenanlagen TR 40 aus der Systemfamilie T 40" bekannt. Bei dieser bekannten Reihenanlage sind die einzelnen Reihen- bzw. Teilnehmerapparate mit einer zentralen Einrichtung verbunden, die ihrerseits mit einer oder mehreren Amtsleitungen oder als Zweit-Nebenstellenanlage mit einer Nebenanschlußleitung verbunden ist. Die zentrale Einrichtung ist mit einer Zentralsteuerung, die einen Mikroprozessor, einen programmierbaren Festwertspeicher und einen Schreib-Lese-Speicher aufweist, ferner mit einem matrixartigen Koppelfeld und Reihenteilnehmerschaltungen bzw. Wählteilnehmerschaltungen versehen, welche letzteren Teilnehmerschaltungen mit den einzelnen Teilnehmerapparaten über gesonderte Vierdrahtleitungen verbunden sind. Der die einzelnen Teilnehmerapparate untereinander verbindende Bus ist innerhalb der zentralen Einrichtung vorgesehen.

Da eine derartige Reihenanlage eine zentrale Einrichtung benötigt, die mit den oben genannten Bausteinen bestückt ist, sind die Kosten für den Aufbau dieser zentralen Einrichtung und deren Installation bzw. Verdrahtungsverbindung mit den einzelnen Teilnehmerapparaten relativ aufwendig. Eine derartige Reihenanlage ist zwar an weitere Ausbaugrößen anpaßbar, jedoch bedingt dies stets außer einer zusätzlichen Anzahl an Teilnehmerapparaten einen Umbau der zentralen Einrichtung durch Ersetzen der betreffenden Leiterplatten und Einbau weiterer Leiterplatten.

Aufgabe der vorliegenden Erfindung ist es, eine Fernmeldereihenanlage, insbesondere als Team- oder Vorzimmeranlage der eingangs genannten Art zu schaffen, die ohne eine zentrale Einrichtung auskommt und die dennoch an die unterschiedlichsten Gegebenheiten, wie Teilnehmergeräteart, Leistungsmerkmale der betreffenden Geräteart und dgl. in einfacher Weise anpassbar ist.

Zur Lösung dieser Aufgabe sind bei einer Fernmeldereihenanlage, insbesondere als Team- oder Vorzimmeranlage der eingangs genannten Art die im Anspruch 1 angegebenen Merkmale vorgesehen.

Der wesentliche Vorteil der erfindungsgemäßen Fernmeldereihenanlage liegt darin, daß keine zentrale Einrichtung notwendig ist. Durch die Dezentralisierung der Ansteuerungs-, Speicher-, Vermittlungs- und dgl. Bereiche ist auch die Verbindung der einzelnen Teilnehmerapparate untereinander vom Aufwand her auf ein Minimum reduziert. Die Zuordnung von gewünschten Leistungsmerkmalen kann ebenso wie der Ausbau des Teilnehmerapparates zu einem bestimmten Gerätetyp ohne Beeinflussung der anderen Apparate in einfacher Weise am Teilnehmerapparat selbst durch die Auswahl einer oder mehrerer Einsteckmodule bestimmter Bauart bestimmt und auch in einfacher Weise nachträglich erweitert oder reduziert werden. Ebenso ist eine nachträgliche Erweiterung der Anzahl der Teilnehmerapparate ohne Beeinflussung der anderen, bereits vorhandenen Teilnehmerapparate in einfacher Weise möglich.

Gemäß bevorzugten Ausführungsbeispielen nach den Merkmalen des Anspruchs 2 und/oder des Anspruchs 3 fungieren die Einsteckmodule als äußere oder als innere Schnittstellen, was im ersten Falle bedeutet, daß der betreffende Teilnehmerapparat amtsleitungsberechtigt und/oder mit einer Nebenstellenanlage verbunden ist, und im anderen Falle bedeutet, daß der betreffende Teilnehmerapparat in entsprechender Weise ausgebildet oder mit einem Zusatzgerät versehen werden kann. Beispielsweise ist dadurch ein als einfacher Telefonapparat ausgebildeter Teilnehmerapparat in einen mobilen Telefonapparat, ein Telefaxgerät oder dgl. umzuwandeln. In beiden Fällen wird zusätzlich zum Einsteckmodul ein entsprechendes Endgerät als Zusatzgerät zum betreffenden Teilnehmerapparat verwendet. Ein weiterer Vorteil ist darin zu sehen, daß das betreffende Zusatzgerät zusammen mit dem Einsteckmodul in einfacher Weise zwischen bestimmten Teilnehmerapparaten auswechselbar und damit mobil bleibt. Zweckmäßigerweise sind dabei die Merkmale gemäß Anspruch 4 vorgesehen.

Darüberhinaus ist es gemäß einem weiteren Ausführungsbeispiel vorliegender Erfindung dann, wenn die Merkmale gemäß Anspruch 5 vorgesehen sind, in einfacher Weise möglich, die interne Funktionalität der Teilnehmerapparate, d.h. durch Vorsehen entsprechender zusätzlicher Leistungsmerkmale, zu erhöhen. Beispielsweise wird mit Hilfe einer derartigen, in den Teilnehmerapparat einsteckbaren Chipkarte erreicht, daS ein Sprachspeicher für die Funktion als Anrufbeantworter vorhanden ist. Es ist auch möglich, mit Hilfe einer derartigen Chipkarte persönliche Leistungsmerkmale vorzusehen, wie beispielsweise Anrufweiterschaltung, Wahlwiederholung, Anruferanzeige und dgl.. Derartige Leistungsmerkmale sind in einfacher Weise jederzeit erweiterbar oder einschränkbar.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:

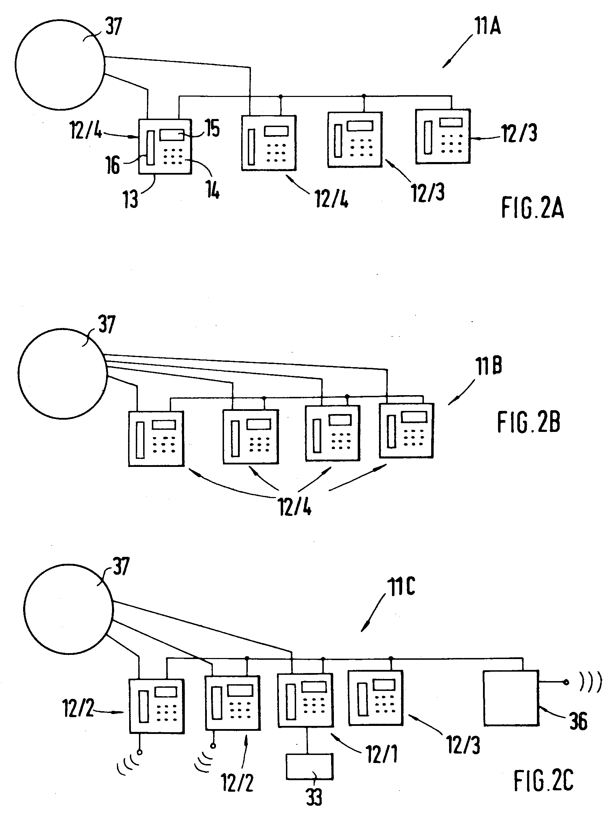

Figur 1
in schematischer Darstellung die interne Struktur einer Fernmeldereihenanlage gemäß einem Ausführungsbeispiel vorliegender Erfindung, und Figuren 2A-2C bspw. Konfigurationen einer mit mehreren Teilnehmerapparaten unterschiedlicher Ausführung versehenen Fernmeldereihenanlage.

Die in der Zeichnung gemäß einem Ausführungsbeispiel und in Varianten dargestellte Fernmeldereihenanlage 11 ist insbesondere für Anlagen mittlerer und kleiner Größenordnung, bspw. als Team- oder Vorzimmeranlage geeignet. Die Fernmeldereihenanlage 11 enthält mehrere Teilnehmerapparate 12, die von der gerätetechnischen Grundausstattung her identisch aufgebaut sind. Die Teilnehmerapparate 12 können rein äußerlich gemäß den Teilfiguren 2 in üblicher Weise aufgebaut sein, besitzen also ein Gehäuse 13, in welches eine Tastatur 14 und ein Display 15 eingebaut sind und auf das ein Hörer 16 auflegbar ist.

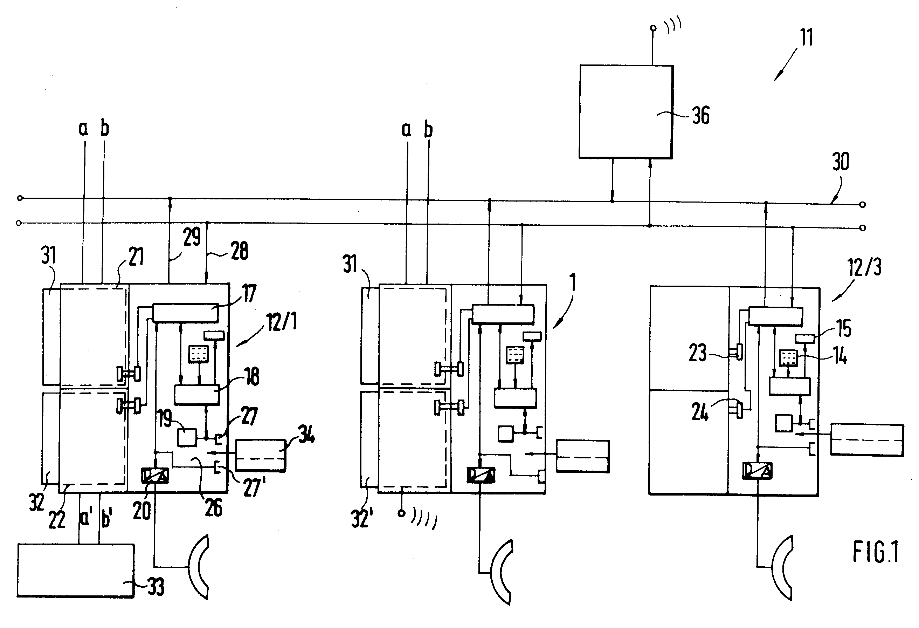

Intern ist jeder Teilnehmerapparat 12 gemäß Figur 1 mit einem (ASIC-)Funktionsschaltkreis 17, mit dem alle vorgesehenen Apparatefunktionen durchführbar sind, mit einem Mikroprozessor 18, der mit dem Funktionsschaltkreis 17 verbunden ist, mit einer Speichereinheit 19 für die Steuerung, die bspw. einen programmierbaren Festwertstpeicher und einen Schreib-Lese-Speicher enthalten kann und die mit dem Mikroprozessor 18 verbunden ist, und mit einem D/A-Wandler 20 versehen, der mit dem Funktionsschaltkreis 17 einerseits und dem Hörer 16 andererseits verbunden ist. Darüberhinaus ist jeder Teilnehmerapparat 12 mit hier zwei Einschubaufnahmen 21 und 22 versehen, die mit Kontaktaufnahmen 23 bzw. 24 versehen sind, welche mit dem Funktionsschaltkreis 17 verbunden sind. An einem den beiden Einschubaufnahmen 21 und 22 abgewandten Bereich des Apparategehäuses 13 ist eine Kartenaufnahme 26 vorgesehen, deren Leseelemente 27,27' mit der Speichereinheit 19 und dem Mikroprozessor 18 bzw. mit dem Funktionsschaltkreis 17 verbunden sind.

Jeder der Teilnehmerapparate 12 ist mit zwei Anschlußleitungen (Zugang und Abgang) 28,29 versehen, die einenends mit dem Funktionsschaltkreis 17 verbunden, und andernends mit einem Bus 30 verbindbar sind, der zur Verbindung der einzelnen Teilnehmerapparate 12 untereinander vorgesehen ist. Dieser Bus 30 ist als internes Vierdraht-Koppelnetz ausgebildet, das mittels PCM-Kanälen der Übertragung von Nutz- und Steuersignalen dient.

Wie aus Figur 1 hervorgeht, sind die Einschubaufnahmen 21 und 22 mit Einsteckmodulen 31 und/oder 32 bestückbar. Je nach der Art der Bestückung der Teilnehmerapparate 12 mit dem oder den Einsteckmodulen 31,32, die äußere oder innere Schnittstellen für ein externes Netz (Postnetz, Nebenstellenanlage) bzw. für Zusatzgeräte bilden, ergibt sich ein Teilnehmerapparat unterschiedlichster Funktionsart. Ist, wie anhand des Teilnehmerapparates 12/3 der Figur 1 dargestellt, keine der Einschubaufnahmen 21,22 mit einem Einsteckmodul 31,32 versehen, so ergibt sich ein einfacher üblicher Telefonapparat 12/3, der lediglich mit den anderen Teilnehmerapparaten 12 der Fernmeldereihenanlage 11, also lediglich intern kommunizieren kann. Wird in die Einschubaufnahme 21 das Einsteckmodul 31 verwendet, so ist damit, wie dies anhand der Teilnehmerapparate 12/1 und 12/2 dargestellt ist, dieser Teilnehmerapparat über Leitungen a und b mit bspw. einer Amtsleitung verbunden. Es ist damit bspw. auch möglich, den betreffenden Teilnehmerapparat mit einer größeren, ggf. übergeordneten Nebenstellenanlage zu verbinden. Jedenfalls ergibt sich mit diesem als sogenannter Amtsverbindungssatz ausgebildeten Einsteckmodul 31 die Möglichkeit einer externen Verbindung des betreffenden Teilnehmerapparates. Wird in die Einschubaufnahme 22 ein bestimmter Typ eines Einsteckmoduls 32 eingebracht, so läßt sich der Gerätetyp des Teilnehmerapparates 12 entsprechend verändern. Beispielsweise kann, wie anhand des Teilnehmerapparates 12/1 dargestellt, dieses als Teilnehmerschaltung ausgebildete Einsteckmodul 32 derart ausgebildet sein, daß es möglich ist, über Anschlußleitungen a' und b' ein Telefaxgerät 33 an den Teilnehmerapparat 12/1 anzuschließen Damit ist dieser Teilnehmerapparat 12/1 funktionell als Telefaxgerät ausgebildet. Eine andere Art eines Einsteckmoduls 32' ist bspw. beim Teilnehmerapparat 12/2 vorgesehen, und zwar derart, daß ein im betreffenden Raum mobiler Telefonapparat verwendet werden kann.

Gemäß Figur 1 ist ein weiterer Teilnehmerapparat 36 in Form einer Feststation für ein Mobiltelefon vorgesehen, wobei die Feststation mit dem Bus 30 verbunden ist.

In nicht in Figur 1 dargestellter Weise ist es auch möglich, beim Teilnehmerapparat 12 zwei gleiche Einsteckmodule 31 zu verwenden, um dem betreffenden Teilnehmerapparat bspw. zwei voneinander unabhängige Amtsleitungen oder eine Amtsleitung und eine Leitung von einer Nebenstellenanlage zuzuführen. Entsprechendes ist auch mit den Einsteckmodulen 32 möglich. Darüberhinaus ist es in nicht dargestellter Weise auch möglich, den Teilnehmerapparat 12 mit mehr als zwei Einschubaufnahmen zu versehen.

In die Kartenaufnahme 26 jedes Teilnehmerapparates 12 ist eine Chipkarte 34 einsteckbar, die einen Programmspeicher darstellt und die mit unterschiedlichster Programmierung versehen sein kann. Mindestens eine dieser Chipkarten 34 enthält einen dem Leseelement 27 zugeordneten Speicherteil mit der Zentralprogrammierung der Fernmeldereihenanlage 11. Darüberhinaus ist es möglich, die Chipkarten mit weiteren dem Leseelement 27' zugeordneten Speicherteilen zu versehen, um dem betreffenden Teilnehmerapparat 12 weitere Leistungsmerkmale zuzuordnen. Beispielsweise ist es dann, wenn die Chipkarte einen Sprachspeicherteil enthält, möglich, dem Teilnehmerapparat 12 die Funktion eines Anrufbeantworters zu übertragen. Es ist ferner möglich, Leistungsmerkmale, wie Nummerspeicher, Wahlwiederholung, Anrufweiterschaltung, Konferenzschaltung und dgl. vorzusehen. Es versteht sich, daß die eine Chipkarte auch in zwei oder mehr Chipkarten aufgeteilt sein kann.

Anhand der Figuren 2A, 2B und 2C sind bspw. Konfigurationen der Fernmeldereihenalage 11 dargestellt, welche Konfigurationen sich aus der unterschiedlichen Anwendung der Einsteckmodule 31 und/oder 32 ergeben. So ist bspw. die Fernmeldereihenanlage 11A nach Teilfigur 2A mit insgesamt vier Telefonapparaten 12 ausgestattet, von denen zwei Telefonapparate 12/4 mit einem als Amtsverbindungssatz ausgebildeten Einsteckmodul 31 versehen und mit einer Ortsvermittlungsstelle oder einer Nebenstellenanlage 37 verbunden sind, während die beiden anderen Telefonapparate 12/3 lediglich zur anlageninternen Kommunikation ausgebildet sind. Die Fernmeldereihenanlage 11B nach Teilfigur 2B besitzt ebenfalls vier Telefonapparate 12/4, die alle amtsverbindungsberechtigt ausgebildet, also mit dem Einsteckmodul 31 versehen sind. Die Fernmeldereihenanlage 11C nach Teilfigur 2C ist mit insgesamt fünf Teilnehmerapparaten 12 ausgestattet, von denen zwei als amtsberechtigte Telefonapparate 12/2 mit einem im Raum mobilen Höreranschluß, ein Apparat 12/1 als Telefaxgerät, ein vierter Apparat 12/3 als anlageninterner Telefonapparat und ein fünfter Apparat 36 als Feststation eines Mobiltelefons ausgebildet ist.

Es versteht sich, daß über die beschriebenen Gerätetypen und Leistungsmerkmale hinaus Einsteckmodule bzw. Chipkarten mit weiteren gerätetechnische und funktionellen Möglichkeiten einsetzbar sind.

## Patentansprüche

1. Fernmeldereihenanlage (11), insbesondere als Team- oder Vorzimmeranlage, mit mehreren Teilnehmerapparaten (12), die über einen Bus (30) miteinander verbunden sind und von denen mindestens ein Teilnehmerapparat (12) mit einer Amtsleitung oder einer Wählnebenstellenanlage verbindbar ist, **dadurch gekennzeichnet,** daß der Bus (30) ein internes Vierdraht-Koppelnetz der einzelnen Teilnehmerapparate (12) miteinander bildet, daS die in der Grundausstattung identischen Teilnehmerapparate (12) mit einem Mikroprozessor (18) und einem von diesem beaufschlagten Funktionsschaltkreis (17), der zur Ausführung aller den Teilnehmerapparaten (12) zugeordneten Funktionen geeignet und ausgebildet ist, versehen sind und daß zur tatsächlichen Ausführbarkeit bestimmter Funktionen Einsteckmodule (31,32) für einen oder mehrere der Teilnehmerapparate (12) vorgesehen sind.

2. Fernmeldereihenanlage nach Anspruch 1, dadurch gekennzeichnet, daß eines (31) der Einsteck-Module (31) eine äußere Schnittstelle bildet.

3. Fernmeldereihenanlage nach Anspruch 1 oder 2, dadurch gekennzeichnet, daß eines (31) der Einsteck-Module (31) eine innere Schnittstelle bildet.

4. Fernmeldereihenanlage nach mindesten einem der Ansprüche 1 bis 3, dadurch gekennzeichnet, daß der Teilnehmerapparat (12) mit mindestens zwei Aufnahmen (21,22) für Einsteckmodule (31,32) versehen ist.

5. Fernmeldereihenanlage nach mindestens einem der Ansprüche 1 bis 4, dadurch gekennzeichnet, daß zur Erhöhung der internen Funktionalität mindestens eine in die Teilnehmerapparate (12) einschiebbare Chipkarte (34) vorgesehen ist.

FIG.1

FIG.2A

FIG.2B

FIG.2C